# EUROPEAN PATENT APPLICATION

(11) **EP 4 372 585 A1**
(43) Date of publication of application: **22.05.2024**
(21) Application number: 23199668.7
(22) Date of filing: 26.09.2023
(51) Int. Cl.: G06F 21/33, G06F 21/44, H04L 9/40

(54) **SECURE SYSTEMS AND METHODS FOR DIGITAL TOKENS**

(30) Priority: 16.11.2022 US 202217988533
(71) Applicant: Barclays Execution Services Limited, London E14 5HP (GB)
(72) Inventor: CHINTA, Lalith, Flanders, 07836 (US)
(74) Representative: Carpmaels & Ransford LLP

(57) **Abstract**

The present disclosure relates to computer-implemented methods, systems, and products for securing the use of digital tokens in network environments using techniques for encrypting the digital token, transmitting an identification code to a computing device, and expunging the digital token and the identification code to mitigate the risk that a digital token store will be compromised.

## Description

### FIELD OF THE DISCLOSURE

This disclosure relates to techniques for efficiently managing and storing digital tokens for accessing a protected resource at a client system on behalf of a user.

### BACKGROUND OF THE DISCLOSURE

A digital token (for example, an access token or a refresh token) is an electronic credential used in a process of gaining access to digital information based on consent from an entity with a right to grant access to that digital information, such as the owner of the digital information. Service providers such as credit reporting agencies and insurance companies may store previously-issued digital tokens for a large number of their customers in a digital token store and present those digital tokens (for example, to bank or hospital systems, respectively) to obtain sensitive information about their customers (such as financial and medical information, respectively). While simplifying the task of managing access credentials, however, a digital token store is an attractive target for a nefarious actor seeking to compromise the store in an effort to gain access to customers' sensitive information and/or perform actions with the permissions of customers' accounts. Digital token encryption provides only a partial solution because, for example, a store of encryption keys maintained by the service provider may be equally vulnerable to being compromised. In addition, malware can acquire data while it is in motion in a compromised system, for example, from the system's memory components such as registers, caches, and RAM. Thus, there is a need for token management systems and methods that are robust in the presence of cyber-threats, particularly to prevent the compromise of digital token stores that could result in unauthorized access to digital information.

### SUMMARY OF THE DISCLOSURE

Certain embodiments may provide, for example, a computer-implemented method for securing the use of digital tokens (for example, access tokens or refresh tokens) in network environments (for example, in networks that include servers of a branded entity and a plurality of their customer's mobile devices). In certain embodiments, for example, the computer-implemented method may comprise: i) encrypting a digital token using an identification code for a computing device (for example, a symmetric encryption key that also serves to identify a designated mobile device) to form an encrypted digital token; assigning the encrypted digital token to the computing device; iii) transmitting the identification code to the computing device; and iv) expunging (for example, permanently deleting from volatile and/or non-volatile memory) the digital token and the identification code. In certain embodiments, for example, the computer-implemented method may further comprise generating the identification code using symmetric cryptography. In certain embodiments, for example, the identification code is transmitted to the computing device via a web browser of the computing device. In certain embodiments, for example, the identification code may be a private corresponding to a public key (for example, a public key-private key pair generated by asymmetric cryptography). In certain embodiments, for example, the computer-implemented method may further comprise storing the encrypted digital token in a database. In certain embodiments, for example, the computer-implemented method may further comprise storing the encrypted digital token remotely from the computing device. In certain embodiments, for example, the computing device may be a customer's computing device (for example, a customer's smartphone or personal computer). In certain embodiments, for example, the computing device may be an employee's computing device (for example, a company issued smartphone or personal computer such as a laptop). In certain embodiments, for example, the identification code may be stored in a secure enclave of the computing device.

Certain embodiments may provide, for example, a client system (for example, a branded entity's computing infrastructure or a financial institution's computing infrastructure that includes one or more servers and/or databases) for securing the use of digital tokens in network environments. In certain embodiments, for example, the client system may comprise: i) one or more servers programmed to: a) encrypt a digital token using a identification code for a computing device to form an encrypted digital token; b) assign the encrypted digital token to the computing device; c) transmit the identification code to the computing device; and d) expunge the digital token and the identification code; ii) a database, the database configured to store the encrypted digital token remotely from the computing device; and iii) one or more software components, the one or more software components configured to store the identification code on the computing device. In certain embodiments, for example, a mobile app (for example, a mobile app downloaded to the computing device via the public Internet) may comprise the one or more software components. In certain embodiments, for example, the one or more software components may be configured to store the identification code in a secure enclave on the computing device. In certain embodiments, for example, the client system may be configured to obtain the digital token from a resource system based on an authorization grant received from the computing device.

Certain embodiments may provide, for example, a product for securing the use of digital tokens in network environments (for example, a product configured to be used in an entity's networked computing infrastructure), the product comprising a non-transitory computer readable medium including instructions that, when executed by at least one processor, cause the at least one processor to perform token management operations. In certain embodiments, for example, the token management operations may comprise: i) encrypting a digital token using an identification code for a computing device to form an encrypted digital token; ii) assigning the encrypted digital token to the computing device; iii) transmitting the identification code to the computing device; and iv) expunging the digital token and the identification code. In certain embodiments, for example, the token management operations may further comprise: communicating with a downloadable mobile app on the computing device (or, for example, via a web browser on the computing device) to transmit the identification code. In certain embodiments, for example, the token management operations may further comprise receiving the identification code from the computing device. In certain further embodiments, for example, the token management operations may comprise decrypting the encrypted digital token using the identification code to recover the digital token. In certain further embodiments, for example, the token management operations may comprise requesting one or more protected resources associated with the digital token. In certain further embodiments, for example, the requesting may comprise transmitting the digital token to a resource system. In certain further embodiments, for example, the token management operations may comprise processing a response to the requesting. In certain further embodiments, for example, the response may comprise the one or more protected resources.

### BRIEF DESCRIPTION OF THE DRAWINGS

In order to facilitate a fuller understanding of the present disclosure, reference is now made to the accompanying drawings, in which like elements are referenced with like numerals. These drawings should not be construed as limiting the present disclosure, but are intended to be illustrative only.
FIG. 1 is a simplified schematic of a use case for a co-branded credit card and customer's handheld mobile device in accordance with an embodiment of the present disclosure.
FIG. 2 is an exemplary protocol sequence for obtaining an access token in accordance with an embodiment of the present disclosure.
FIG. 3 is an exemplary architecture of a system in accordance with an embodiment of the present disclosure.
FIG. 4 is an exemplary sequence of token management operations for securing an access token in accordance with an embodiment of the present disclosure.
FIG. 5 is an exemplary sequence of token management operations for providing an access token to obtain a protected resource in accordance with an embodiment of the present disclosure.
FIG. 6 is a simplified block diagram showing an exemplary architecture of a resource owner's computing device in accordance with an embodiment of the present disclosure.
FIG. 7 is a simplified block diagram showing an exemplary architecture of a client system in accordance with an embodiment of the present disclosure.

### DETAILED DESCRIPTION OF EMBODIMENTS

The present disclosure is based, generally, on the discovery that each customer of a client entity can substantially mitigate the risk that the client entity's digital token store will be compromised by storing a token encryption key (for decrypting an encrypted digital token) as a non-public device identification code in secured memory of the customer's computing device. Token management operations based on this discovery allow the client entity expunge the token encryption key and an unencrypted digital token from its volatile and non-volatile memory, retaining only the customers' encrypted digital tokens (for example, in a database). The present disclosure is further specifically based, in part, on the discovery that, even if a nefarious actor is aware that the technique is being employed, such knowledge does not short circuit the security provided by the technique.

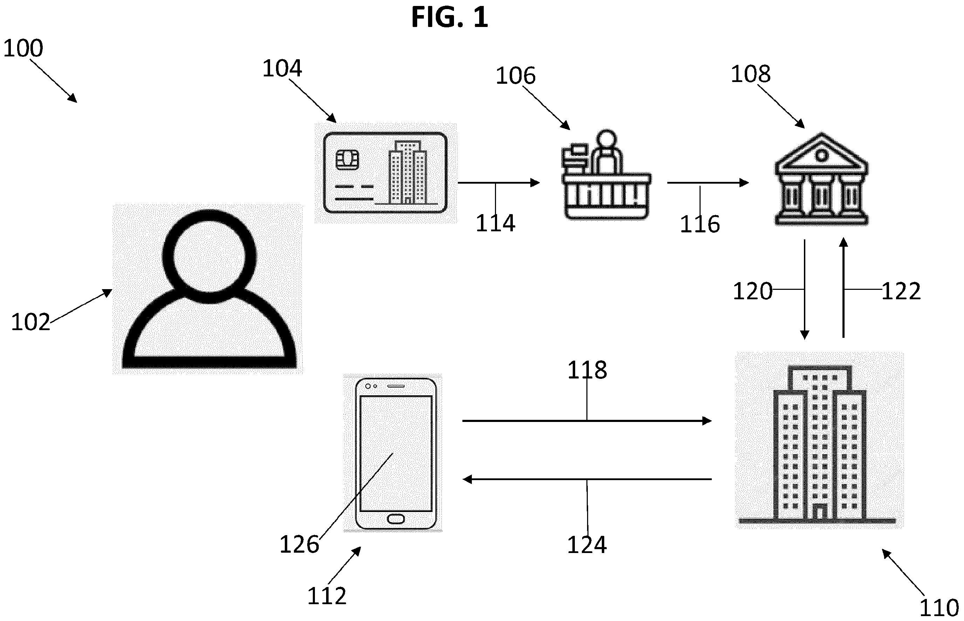

For example, FIG. 1 shows a use case (100) in which a customer (102) purchases (114) an item from a merchant (106) (i.e., the "client entity" in this use case) using a credit card (104). The customer then reviews financial details of the transaction (and optionally other transactions) via an app on the customer's handheld mobile device (112) such as a smartphone. In this use case, the credit card (104) is co-branded by a financial services company (108) that finances credit card transactions and a branded entity (110) such as a branded company. Transaction information (116) is supplied to the financial services company (108). The app on the customer's handheld mobile device (112) requests (118) the information by submitting a message to the branded entity (110) that includes a request for transaction information and a non-public identification code for the customer's handheld mobile device (112) to the branded entity (110). The branded entity (110) uses the non-public identification code to decrypt an access token to obtain an unencrypted access token and then submits a request (120) to the financial services company (108) by submitting a message to the financial services company (108) that includes the unencrypted access token and the request for transaction information. Concomitant with the request (120), the branded entity (110) expunges the non-public identification code and the unencrypted access token from its system. Using the access token, the financial services company (108) verifies the right of the branded entity (110) to receive the transaction information and then sends (122) the transaction information to the branded entity (110). Finally, the branded entity (110) responds (124) to the request (118) with the transaction information, which is displayed for the customer (102) to view using an interface (126) associated with the app on the customer's handheld mobile device (112).

More generally, certain embodiments may provide, for example, methods, systems, products, software (for example, one or more software components such as one or more software modules), computing infrastructure and/or apparatus for securing any kind of digital token in relation to a resource owner where the resource owner controls their own computing device.
A. In certain embodiments, for example, the digital token may be a credential for authentication and/or authorization. In certain embodiments, for example, the digital token may be a credential that authorizes access to one or more protected resources (for example, one or more items of digital information such as one or more items of confidential financial or medical information). In certain embodiments, for example, the digital token may comprise or consist of a string, such as an alphanumeric string and/or a cyphertext string. In certain embodiments, for example, the string may be opaque to the requesting entity. In certain embodiments, for example, the digital token may be valid for presentment for a limited duration of time. In certain embodiments, for example, the limited duration of time may define an expiry time of the digital token, after which an digital token will no longer be a valid credential. In certain embodiments, for example, the digital token may limit the scope of access to the one or more protected resources. In certain embodiments, for example, the digital token may comprise an identifier used to retrieve the authentication and/or authorization credential. In certain embodiments, for example, the digital token may comprise the authentication and/or authorization credential per se. In certain embodiments, for example, the authorization may be verifiable. For example, the authorization may comprise a cryptographic signature based on a cryptographic scheme for authenticating digital information (such as the digital token) implemented using techniques from the field of public-key cryptography. In certain embodiments, for example, the cryptographic signature may be a digital signature used by a recipient of the digital token (for example, the financial services company (108) in FIG. 1) to ensure that the digital token is the same one transmitted by the sender of the digital token (for example, the branded entity (110) in FIG. 1). In certain embodiments, for example, the cryptographic scheme may be selected from the group consisting of the Rivest-Shamir-Adleman (RSA) cryptosystem, the ElGamal cryptosystem, an Elliptic Curve Cryptography cryptosystem, or another suitable cryptosystem, for example, a quantum computing-based cryptosystem.
B. In certain embodiments, for example, the digital token may be an access token. In certain embodiments, for example, the access token may be a credential that designates a right to access to one or more protected resources. In certain embodiments, for example, the access token may provide authorization to access the one or more protected resources for a limited duration of time. In certain embodiments, for example, the protect resource may be confidential information (for example, information protected by secrecy regulations). In certain embodiments, for example, the protect resource may be privileged information. In certain embodiments, for example, the protect resource may be financial information, such as credit information, financial transaction information, investment information, tax information, or bank account information.
C. In certain embodiments, for example, the digital token may be a refresh token. In certain embodiments, for example, the refresh token may be a credential used to obtain an access token. In certain embodiments, for example, the refresh token may be used to obtain a new access token to replace a previously created access token. For example, the refresh token may be used to obtain a new access token to replace a previously created access token when the previously created access token becomes invalid or expires. In certain embodiments, for example, a refresh token may be used to extend the duration of a previously created access token. In certain embodiments, for example, the refresh token may be used to obtain an additional access token with an identical or shorter duration. In certain embodiments, for example, an entity may receive the refresh token associated with an access token. In certain embodiments, for example, an entity may receive the refresh token together with an associated access token.
D. In certain embodiments, for example, the digital token may be a grant token. In certain embodiments, for example, the grant token may be presented by an entity to identify itself to a third party.
E. In certain embodiments, for example, the resource owner may be an entity that is capable of granting access to a protected resource. In certain embodiments, for example, the resource owner may be a person, referred to as a user with a computing device, or an organization, such as a private, corporate, or governmental entity, with a computing device. In certain embodiments, for example, the resource owner may be a customer of another entity, such as a client entity as referenced herein. Thus, the computing device may be the employee's computing device. In certain embodiments, for example, the resource owner may be an employee of another entity, such as a client entity as referenced herein. In certain embodiments, for example, the resource owner may be an applicant for employment, credit, and/or a loan from another entity, such as a client entity as referenced herein.
F. In certain embodiments, for example, the computing device may be any type of general purpose computing device including a portable computing device (for example, a laptop computer), a mobile computing device (for example, a handheld computing device such as a smartphone comprising a processor and a memory), or an onboard computing device (for example, a computing device installed in a vehicle such as an automobile or a tractor). In certain embodiments, for example, the computing device may be a personal computing device, such as a personal laptop computer, a personal desktop computer, or a personal web-enabled telephone, such as a personal smartphone, or a personal tablet device. In certain embodiments, for example, the personal computing device may be personally owned or company-issued. In certain embodiments, for example, the mobile computing device may be any suitable mobile computing device, such as a smartphone, tablet, laptop, wearable electronics, phablet, pager, personal digital assistant (PDA), smart glasses, smart watch or bracelet, etc. In certain embodiments, for example, the computing device may comprise an interface for wireless communication, for example, a cellular interface, a Bluetooth interface, or a Wi-Fi interface. In certain embodiments, for example, the computing device may comprise a wired interface, for example, an ethernet interface.

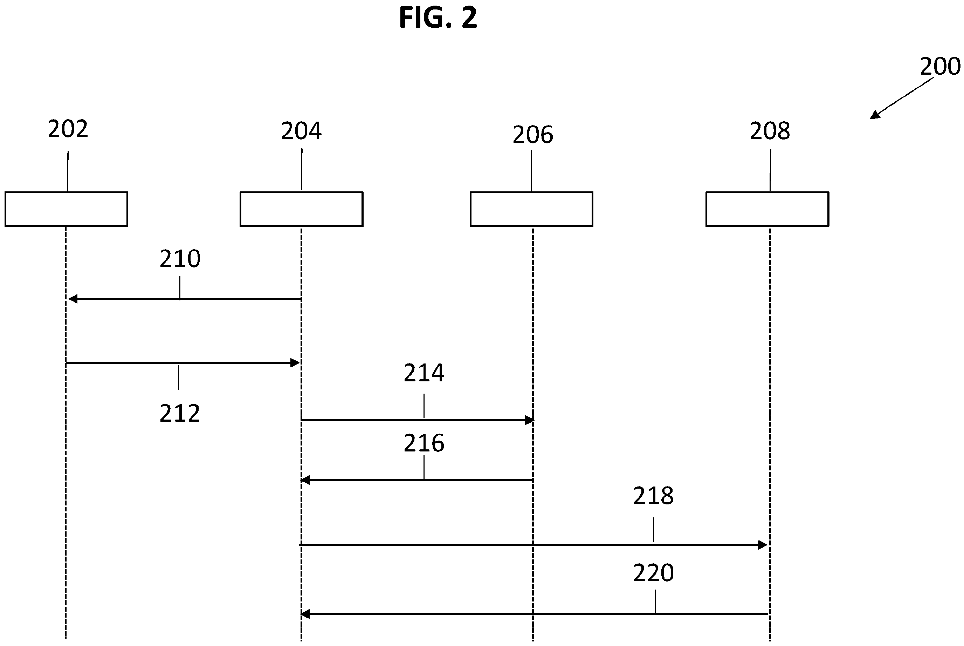

Referring to FIG. 2 there is shown a protocol (200) in accordance with an embodiment of the present disclosure. According to this embodiment, the protocol (200) involves four entities: a resource owner (202), a client entity (204), an authorization entity (206), and a resource entity (208). For example, for example, the protocol (200) can be a protocol for the Open Authorization 2.0 framework ("OAuth"), the SAML framework, or the OpenID framework, or another framework providing a protocol.

As noted above, the resource owner (202) is capable of granting access to a protected resource. For example, the resource owner (202) can be the customer (102) discussed with respect to FIG. 1 who may wish to grant the branded entity (110) access to a protected resource so that the protect resource can be displayed to the customer (102) using the interface (126) associated with the app on the customer's handheld mobile device (112). As another example, the resource owner (202) can be one or more of a consumer, borrower, potential tenant, and the like who wishes to grant a third party request from a financial institution, mortgage lender, landlord, and the like to access the resource owner's financial information held by a third-party source such as a bank. As another non-limiting example, the resource owner (202) can be a patient who wishes to allow a third party such as a medical provider, insurance company, pharmacy, and the like to access the patient's medical record information.

The client entity (204) is an entity, or an application, that, when authorized by the resource owner (202), can request access to the protected resource on behalf of the resource owner (202),. Non-limiting examples of client entities include entities that aggregate information for customers, entities that sponsor financial products, other financial intermediaries such has credit card companies and consumer reporting agencies.

Examples of credit card companies within in the scope of the disclosure include, but are not limited to, credit cards issued by American Express, Bank of America, Barclays, Capital One, Chase Bank, Citibank, Discover, Mastercard, Navy Federal Credit Union, Pentagon Federal Credit Union, PNC, United Services Automobile Association, U.S. Bank, Visa, and Wells Fargo.

Examples of consumer reporting agencies within the scope of the disclosure include but are not limited to consumer credit reporting agencies, employment screening agencies, tenant screening agencies, check and bank screening agencies, auto and property insurance reporting agencies, medical information agencies, low-income and subprime reporting agencies, supplementary report agencies, and consumer utility reporting agencies. Examples of consumer reporting agencies falling in the scope of the disclosure include but are not limited to Equifax, TransUnion, Experian, DISA Global Solutions, Inc., Asurint, CCC Verify, Cisive, Social Intelligence, uConfirm, AmRent, Universal Background Screening, National Cred-A-Check, Inc., Accurate Background, backgroundchecks.com, Certegy Payment Solutions, LLC, National Consumer Telecom & Utilities Exchange (NCTUE), Info Cubic, LLC, Pre-employ.com, LexisNexis C.L.U.E. (Auto & Property Reports), Insurance Information Exchange (iiX), DataX, ADP Screening & Selection Services, Inc., Innovis, The Work Number, CoreLogic Credco, EmpInfo, and HireRight.

The authorization entity (206) is an entity that grants and issues access tokens to the client entity (204) after authenticating the resource owner and obtaining authorization. The authorization entity (206) can also issue refresh tokens. If the authorization entity (206) issues a refresh token, can be included when issuing an access token.

The resource entity (208) is an entity that hosts the protected resource and is capable of accepting and responding to requests for the protected resource using access tokens.

In step (210), the client entity (204) requests authorization from the resource owner (202) for access to the protected resource. The authorization request can be made directly to the resource owner (202), or indirectly via the authorization entity (206) as an intermediary.

In step (212), the client entity (204) receives an authorization grant, which is a credential representing the authorization provided by the resource owner (202). For example, the authorization can be expressed using one of a plurality of "grant types" that depends on the method(s) used by the client entity (204) to request authorization and the type(s) supported by the authorization entity (206).

In step (214), the client entity (204) requests an access token by authenticating with the authorization entity (206) and presenting the authorization grant. The authentication can be expressed using one of a plurality of "authentication types" for authenticating the client entity (204) at the authorization entity (206). The authentication type depends on the method(s) used by the client entity (204) to authenticate itself and the type(s) supported by the authorization entity (206).

In step (216), the authorization entity (206) authenticates the client entity (204) and validates the authorization grant, and if valid, issues an access token.

In step (218), the client entity (204) requests the protected resource from the resource entity (208) and authenticates itself at the resource entity (208) by presenting the access token to the resource entity (208).

In step (220), the resource entity (208) validates the access token. If the access token is valid, the resource entity (208) serves the request by transmitting the protected resource to the client entity (204).

Certain embodiments may provide, for example, methods, systems, products, computer executable instructions, software, computing infrastructure and/or apparatus for a client system of the client entity to secure any kind of digital token.
A. In certain embodiments, for example, the client system may comprise one or more processors. In certain embodiments, for example, the one or more processors may comprise one or more processing units, such as one or more central processing units (CPU), one or more multi-core processing units, one or more field programmable gate arrays (FPGAs), one or more application specific integrated circuits (ASICs), operable under control of one or more instruction sets defining logic modules configured to execute instructions, or a combination of two or more of the foregoing. In certain embodiments, for example, the one or more processors may be present in, for example, one or more servers or present in and/or distributed among a plurality of servers. In certain embodiments, for example, the server, one or more servers, or the plurality of servers may comprise or consist of a web service server, a client-owned servers, or a combination of the foregoing.
B. In certain embodiments, for example, the client system may comprise a volatile memory. In certain embodiments, for example, the volatile memory may comprise Dynamic Random-Access Memory (DRAM), Static Random-Access Memory (SRAM), CPU Cache memory, Advanced Random-Access Memory, other types of primary storage such as Random-Access Memory (RAM), semi-volatile memory, or a combination of two or more of the foregoing.
C. In certain embodiments, for example, the client system may comprise a non-volatile memory. In certain embodiments, for example, the nonvolatile memory may comprise Read-Only Memory (ROM), Programmable ROM (PROM), a hard disk drive or other electromechanical storage device, a solid state disk (SSD), a multimedia card such as an MMC, an embedded MMC (eMMC), a reduced size MMC (RS-MMC), or a micro-MMC, a secure digital card such as an SD, a mini-SD, or a micro-SD, a universal serial bus (USB) data storage device, a universal flash storage (UFS) device, a personal computer memory card international association (PCMCIA) card-type data storage device, a peripheral component interconnect (PCI)-card type data storage device, a PCI express (PCI-E) card-type data storage device, a compact flash (CF) card, a smart media card, a memory stick, or a combination of two or more of the foregoing.
D. In certain embodiments, for example, the client system may comprise a database, for example, a database in the volatile memory or the non-volatile memory of the client system. In certain embodiments, for example, the database may be a relational database, a structured query language (SQL) database, a distributed database, an object database, or a combination of two or more of the foregoing.
E. In certain embodiments, for example, the client system may comprise computer-executable instructions. In certain embodiments, for example, the computer-executable instructions may be implemented in hardware, firmware, software, or any combination thereof. In certain embodiments, for example, the computer-executable instructions may be executable (and executed) by the one or more processors.

In certain embodiments, for example, the computer-executable instructions may comprise instructions to generate a code. In certain embodiments, for example, the code may be cyphertext. In certain embodiments, for example, the code may be generated by a quantum random number generator. In certain embodiments, for example, the code may be an identification code. In certain embodiments, for example, the code may be a code to identify a computing device.

In certain embodiments, for example, the code may be a dual-purpose code. In certain embodiments, for example, a first purpose of the dual-purpose code may be to serve as a non-public device identification code for the computing device. In certain embodiments, for example, a client system that creates the dual-purpose code may credit receipt of the dual-purpose code from the computing device as a form of authentication of the computing device (for example, to guard against a "man-in-the-middle" attack). In certain embodiments, for example, a second purpose of the dual-purpose code may be to serve as a decryption key for information (for example, an encrypted digital token such as an access token or a refresh token stored on the client system).

In certain embodiments, for example, the computer-executable instructions may use the non-public identification code as an encryption key to encrypt and/or decrypt a digital token with a symmetric encryption algorithm. In certain embodiments, for example, the symmetric encryption algorithm may be selected from the group consisting of Triple Data Encryption Algorithm (3DES), Advanced Encryption Standard (AES), Camelia (Block cipher developed by Mitsubishi and NTT), Data Encryption Standard (DES), Fortezza (Security token based cipher), GOST (Block cipher developed in USSR), International Data Encryption Algorithm (IDEA), Rivest Cipher 2 (RC2), Rivest Cipher 4 (RC4), and SEED (Block cipher developed by Korean Information Security Agency). In certain embodiments, for example, the computer-executable instructions may generate a plurality of such non-public identification codes corresponding to a plurality of computing devices (for example, the computing devices of resource owners). In certain further embodiments, for example, the correspondence may be a 1-to-1 correspondence between the non-public identification codes and the computing devices such that each computing device corresponds to a distinct non-public identification code. In certain further embodiments, for example, the correspondence may be an N-to-M correspondence between the non-public identification codes and the computing devices where N and M are integers, such that N non-public identification codes corresponds to M computing devices (for example, a single non-public identification code could correspond to each computing device identified and associated with the resource owner). In certain embodiments, for example, the computer-executable instructions may generate a non-public identification code (or plural non-public identification codes) using key generation in accordance with a symmetric encryption algorithm.

In certain embodiments, for example, the computer-executable instructions may use the non-public identification code as an encryption key (for example, a private key) to encrypt and/or decrypt a digital token with an asymmetric (or public key) encryption algorithm. In certain embodiments, for example, the asymmetric encryption algorithm may be selected from the group consisting of Rivest-Shamir-Adleman (RSA), Elliptic Curve Digital Signature Algorithm (ECDSA), Digital Signature Algorithm (DSA), or Diffie-Hellman key agreement protocol. In certain embodiments, for example, the non-public identification code may be random cyphertext generated by quantum random number generator. In certain embodiments, for example, the computer-executable instructions may generate a plurality of such non-public identification codes corresponding to a plurality of computing devices (for example, the computing devices of resource owners). In certain further embodiments, for example, the correspondence may be a 1-to-1 correspondence between the non-public identification codes and the computing devices such that each computing device corresponds to a distinct non-public identification code. In certain further embodiments, for example, the correspondence may be an N-to-M correspondence between the non-public identification codes and the computing devices where N and M are integers, such that N non-public identification codes corresponds to M computing devices (for example, a single non-public identification code could correspond to each computing device identified and associated with the resource owner). In certain embodiments, for example, the computer-executable instructions may generate an non-public identification code (or plural non-public identification codes) using key generation in accordance with an asymmetric encryption algorithm.

In certain embodiments, for example, the non-public identification code may the product of a hashing algorithm. In certain embodiments, for example, the hashing algorithm may be selected from the group consisting of BLAKE-256, BLAKE-512, BLAKE2s, BLAKE2b, Elliptic Curve Only Hash (ECOH), the Fast Syndrome-based (FSB) hash, GOST, Grostl, HAS-160, HAVAL, JH, the Message Digent-2 (MD2) algorithm, MD4, MD5, MD6, RadioGatúm, the RACE Integrity Primitives Evaluation Message Digest (RIPEMD), RIPEMD-128, RIPEMD-160, RIPEMD-320, the Secure Hash Algorithm-1 (SHA-1), SHA-2, SHA-224, SHA-256, SHA-384, SHA-512, SHA-3, Skein, Snefru, Spectral Hash, Streebog, SWIFFT, Tiger, Whirlpool-0, Whirlpool-T, and Whirlpool.

In certain embodiments, for example, the computer-executable instructions may comprise instructions to manage information in the volatile memory. In certain embodiments, for example, the computer-executable instructions may comprise computer-executable instructions to expunge information from the volatile memory. In certain embodiments, for example, the computer-executable instructions to expunge information may comprise de-allocating and/or overwriting specified memory addresses in the volatile memory. In certain embodiments, for example, the specified memory addresses may comprise those storing the code (for example, the non-public identification code). In certain embodiments, for example, the overwriting of specified memory addresses may comprise overwriting the specified memory addresses with one or more predetermined values.

Certain embodiments may provide, for example, methods, systems, products, computer executable instructions, software, computing infrastructure and/or apparatus for a computing device (for example, a computing device of the resource owner such as a customer's mobile computing device) to secure a code (for example, a dual-purpose code as described above).
A. In certain embodiments, for example, the computing device may comprise computer-executable instructions. In certain embodiments, for example, the computer-executable instructions may be implemented in hardware, firmware, software, or any combination thereof. In certain embodiments, for example, the software may comprise a downloaded application. In certain embodiments, for example, the software may comprise one or more software components. In certain embodiments, for example, the software may comprise one or more software modules. In certain embodiments, for example, the software may comprise a downloaded app (for example, a downloaded app consisting of one or more software components). In certain embodiments, for example, the software may comprise a mobile app (for example, a downloaded mobile app). In certain embodiments, for example, the software may comprise a downloaded app downloaded using the public Internet. In certain embodiments, for example, the instructions may comprise one or more modules (for example, one or more software modules) that, when executed, provides a user-interface, controls a camera, processes information received via communication with the client system, and/or accesses information present in a storage media for electronic information. In certain embodiments, for example, the instructions may comprise a virtual machine. In certain embodiments, for example, the instructions may comprise a thin client. In certain embodiments, for example, the instructions may comprise a web interface to a remote application.

In certain embodiments, for example, the computer executable instructions (for example, software) may be invoked using one or more web browsers. In certain embodiments, for example, the one or more web browsers (for example one web browser, two web browsers, etc.) may be selected form the group consisting of the Microsoft Edge web browser, the Google Chrome web browser, the Apple Safari web browser, the Brave web browser, the Cake web browser, the Firefox web browser, or a combination of two or more of the foregoing web browsers. In certain embodiments, for example, the one or more web browsers may comprise a mobile browser. In certain embodiments, for example, the one or more web browsers may comprise a web browser with strong authentication support (for example, FIDO2 Strong Authentication Support). In certain embodiments, for example, the web browser with strong authentication support may be selected from a group consisting of the Microsoft Edge web browser, the Google Chrome web browser, the Apple Safari web browser, or the Firefox web browser. In certain embodiments, for example, the one or more web browsers may comprise a web browser with HTTP Cookie storage support.

In certain embodiments, for example, the computer executable instructions may be software in the form of a browser extension. In certain embodiments, for example, the computer executable instructions may be in the form of a plug-in. In certain embodiments, for example, the computer executable instructions may be in the form of an add on.

B. In certain embodiments, for example, the computing device may comprise one or more storage media for electronic information. In certain embodiments, for example, the one or more storage media may comprise one or more transitory or non-transitory machine-readable (for example, computer-readable) storage media (for example, memory, data storage, etc.), which may be read and executed by one or more processors. For example, such one or more machine-readable storage media may be one or more storage device, mechanism, or other physical structure for storing or transmitting information in a form readable by a machine (for example, a volatile or non-volatile memory, a media disc, or other media device).

In certain embodiments, for example, the storage media may comprise one or more regions of memory including software that are isolated from other software executed by the processor. In certain embodiments, for example, the storage media may provide a trusted execution environment. In certain embodiments, for example, the trusted execution environment may comprise one or more secure enclaves. In certain embodiments, for example, the one or more secure enclaves may be embodied as a protected region of storage media. In certain embodiments, for example, the one or more secure enclaves may include software and/or data (for example, a non-public identification code for the computing device). In certain embodiments, for example, the software and/or data may be measured, validated, or otherwise authenticated. In certain embodiments, for example, the secure enclave may protect such software and/or data from access by software executing outside of the same secure enclave. In certain embodiments, for example, the software and/or data in the secure enclave may be protected from access and/or tampering using any combination of hardware protection and/or cryptographic protection.

Certain embodiments may provide, for example, methods, systems, products, computer executable instructions, software, computing infrastructure and/or apparatus for networked communications between computing resources of a resource owner, a client entity, an authorization entity, and a resource entity.
A. In certain embodiments, for example, the networked communications may comprise packet switched communications. In certain embodiments, for example, the networked communications may conform to an Internet Protocol. In certain embodiments, for example, the networked communications may use all or a portion of the public Internet, a Local Area Network (LAN) (for example, a wired LAN, a wireless LAN, of a combination of the two), a Wide Area Network, a Metropolitan Area Network, a Campus Area Network, a Storage Area Network, a Personal Area Network, a System Area Network (or a Cluster Area Network), an Electronic Private Network, a Virtual Private Network (VPN), a Software-Defined Network, a Virtual Network, or a combination (or hybrid) of two or more of the foregoing networks. In certain embodiments, for example, the network may comprise a local area network supporting Ethernet communication over twisted pair cabling interconnected via one or plural switches and one or plural routers. In certain embodiments, for example, the network may comprise a local area network supporting wireless communication (for example, wireless communication according to the IEEE 802.11 standard) using one or plural wireless antenna. In certain embodiments, for example, the network may comprise a local area network having an ARCNET, Token Ring, Localtalk, or FDDI configuration. In certain embodiments, for example, the network may comprise a local area network having Internet access. In certain embodiments, for example, the network may be exclusive of Internet access. In certain embodiments, for example, the network may transmit packet data by one or more propagated signals, for example, an electrical signal, an optical signal, an acoustical wave, a carrier wave, an infrared signal, a digital signal, or a combination of two or more of the foregoing signals. In certain embodiments, for example, the network may be configured to transmit packet data (for example, Ethernet frames) at a rate of at least 25 kilobits per second (Kbps), for example, at least 100 Kbps, at least 250 Kbps, at least 500 Kbps, at least 1 million bits per second (Mbps), at least 10 Mbps, at least 25 Mbps, at least 50 Mbps, at least 100 Mbps, at least 250 Mbps, at least 500 Mbps, at least 1 gigabit per second (Gbps), at least 10 Gbps, at least 25 Gbps, at least 50 Gbps, or the network may be configured to transmit packet data at a rate of at least 100 Gbps. In certain embodiments, for example, the network may have a tree topology. In certain embodiments, for example, the network may be a mesh network.
B. In certain embodiments, for example, a portion or all of the networked communications (for example, part or all of the communications between the resource owner's computing resources and the client entity's computing resources, the client entity's computing resources and the authorization entity, and/or the client's computing resources and the resource entity, or a combination of two or more of the foregoing) may be secured network communications. In certain embodiments, for example, the secured communications may be encrypted, for example, using Secured Socket Layer (SSL), Transport Layer Security (TLS), or an IPsec protocol.

In certain embodiments, for example, part or all of the networked communications may proceed through one or more network tunnels (for example, part or all of the communications between the resource owner's computing resources and the client entity's computing resources may proceed through one or more network tunnels, part or all of the communications between the client entity's computing resources and the authorization entity may proceed through one or more network tunnels, and/or part or all of the communications between the client entity's computing resources and the resource entity may proceed through one or more network tunnels). In certain embodiments, for example, one or more network tunnels may be negotiated wherein one or more encryption keys is established by executing a key exchange algorithm between communication endpoints. In certain embodiments, for example, the key exchange algorithm may be selected from the group consisting of Rivest, Shamir, Adleman (RSA), Diffie-Hellman (DH), Diffie-Hellman Ephemeral (DHE), Elliptic-Curve Diffie-Hellman (ECDH), Kerberos (KRB5), Secure Remote Password Protocol (SRP), Pre-shared key (PSK), Digital Signature Algorithm (DSA), Elliptic Curve Digital Signature Algorithm (ECDSA), and Digital Signature Standard (DSS).

In certain embodiments, for example, information communicated via the one or more network tunnels may be encrypted using a symmetric encryption algorithm prior to transmitting the information via the network tunnel. In certain embodiments, for example, the symmetric encryption algorithm may be selected from the group consisting of Triple Data Encryption Algorithm (3DES), Advanced Encryption Standard (AES), Camelia (Block cipher developed by Mitsubishi and NTT), Data Encryption Standard (DES), Fortezza (Security token based cipher), GOST (Block cipher developed in USSR), International Data Encryption Algorithm (IDEA), Rivest Cipher 2 (RC2), Rivest Cipher 4 (RC4), and SEED (Block cipher developed by Korean Information Security Agency).

In certain embodiments, for example, information communicated between endpoints (for example, between the computing device and the client system) may be encrypted using quantum cryptography, for example, via quantum key distribution, a mistrustful quantum cryptography technique, a bounded or noisy quantum storage technique, or a position-based quantum cryptography technique.

In certain embodiments, for example, information communicated via the one or more network tunnels may be hashed (for example, salted and hashed) prior to transmitting the information via the network tunnel. In certain embodiments, for example, the hashed value may be obtained by passing the portion of the data packet through a hashing algorithm. In certain embodiments, for example, the hashing algorithm may be selected from the group consisting of BLAKE-256, BLAKE-512, BLAKE2s, BLAKE2b, Elliptic Curve Only Hash (ECOH), the Fast Syndrome-based (FSB) hash, GOST, Grostl, HAS-160, HAVAL, JH, the Message Digent-2 (MD2) algorithm, MD4, MD5, MD6, RadioGatúm, the RACE Integrity Primitives Evaluation Message Digest (RIPEMD), RIPEMD-128, RIPEMD-160, RIPEMD-320, the Secure Hash Algorithm-1 (SHA-1), SHA-2, SHA-224, SHA-256, SHA-384, SHA-512, SHA-3, Skein, Snefru, Spectral Hash, Streebog, SWIFFT, Tiger, Whirlpool-0, Whirlpool-T, and Whirlpool.

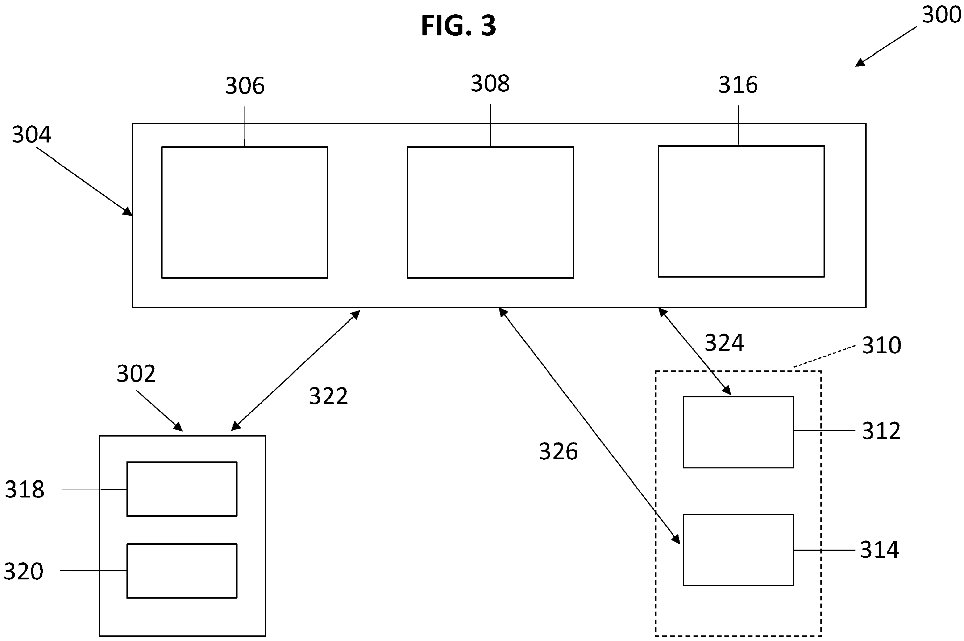

Referring to FIG. 3 there is shown a system (300) in accordance with an embodiment of the present disclosure comprising a computing device (302), a client system (304), an authorization system (312), and a resource system (314). The authorization system (312) and the resource system (314) can be part of an optional combined external system (310). The computing device (302) is configured for communication (322) with the client system (304). The client system (304) is configured for communication (324) with the authorization system (312), directly or optionally via the optional combined external system (310). The client system (304) is also configured for communication (326) with the resource system (314), directly or optionally via the optional combined external system (310). The computing device (302) can be a computing device of the resource owner (202) in communication with the client system (304) of the client entity (204).

The computing device (302) comprises an customer engine (318) having instructions executable by the computing device (for example, a downloaded app) for performing computing operations. The customer engine (318) can comprise one or more modules (for example, one or more software modules) that, when executed, provides a user-interface, controls a camera, process information received via communication (322), cause information to be communicated via communication (322), and/or access information present in a storage media (320) for electronic information. The computing device (302) comprises the storage media (320) for electronic information. The storage media (320) can include one or more regions of memory including software that are isolated from other software executed by the processor (for example, a secure enclave).

The client system (304) is configured to access data stored at the resource system (314), subject to permission from a resource owner (202). The client system (304) can be a system controlled by a client entity (204). The client system (304) comprises a client engine (306), a volatile memory (308), and a nonvolatile memory (316). The client system (304) is configured for communication (322) with the computing device (302), communication (324) with the authorization system (312), and communication (326) with the resource system (314). The client system (304) can comprise one server, one or more servers, or a plurality of servers.

The client engine (306) comprises first instructions for communication (324) with the authorization system (312) to retrieve an access token (or a refresh token). The client engine (306) comprises second instruction to store the retrieved access token in volatile memory of the client system (304). The client engine (306) does not store the access token in nonvolatile memory (316) of the client system (304). The client engine (306) comprises third instructions to generate an identification code for the computing device (302) solely in volatile memory (308) of the client system (304). The identification code can be a private key generated with and a public key using asymmetric cryptography. The client engine (306) does not store the identification code in nonvolatile memory (316) of the client system (304). The client engine (306) comprises fourth instructions to encrypt the access token using the identification code. The client engine (306) comprises fifth instructions to expunge the identification code and the access token from the volatile memory (308). The fifth instructions to expunge can include de-allocation and overwriting of those memory addresses in the volatile memory (308) associated with the identification code and the access token. The fifth instructions to expunge can be executed proximate completion fourth instructions to encrypt the access token. The overwriting of memory addresses can comprise overwriting the memory addresses with a predetermined value.

The first through fifth instructions, the identification code, and the access token can be protected from access and/or tampering using any combination of hardware protection and/or cryptographic protection that are isolated from other software executed by the client system (304). The first through fifth instructions, the identification code, and the access token can be secured in one or more protected regions of the volatile memory (308).

The authorization system (312) is configured to authorize requests for access to protected resources that are stored at the resource system (314). The authorization system (312) can comprise the authorization entity (206). The authorization system (312) can comprise a plural servers or a single server.

The resource system (314) is configured to store data associated with users of devices, such as the computing device (302). The data stored at the resource system (314) can comprise protected resources, such as one or more secure data items. The resource system (314) can be a system controlled by a resource entity (208).

Each of the one or more protected resources is prevented from being sent to a device or a system that is remote and distinct from the resource system (314), such as the client system (304), without the corresponding user providing authorization to the resource system (314) for the one or more protected resources to be sent to a remote device or system.

Each of the one or more protected resources can be indicative of private information relating to a user of the resource system (314). In one specific example, each data item stored at the resource system (314) comprises financial data relating to the user, such as details that enable the user to make payments or the details of previous financial transactions made by the user. The resource system (314) can comprise the resource entity (208). The resource system (314) can comprise one server, one or more servers, or a plurality of servers.

One of the client system (304), authorization system (312), and resource system (314) can be separately controlled from the other two systems.

Alternatively, one or more of the client system (304), authorization system (312), and resource system (314) can be commonly controlled. For example, the client system (304) and authorization system (312) can be commonly controlled while the resource system (314) is separately controlled. For example, the client system (304) and resource system (314) can be commonly controlled while the authorization system (312) is separately controlled. For example, the authorization system (312) and resource system (314) can be commonly controlled while the client system (304) is separately controlled. For example, the client system (304), authorization system (312), and resource system (314) can be commonly controlled.

The optional combined external system (310) can comprise a plurality of sub-systems, for instance, a plurality of servers. In the example described herein, the optional combined external system (310) comprises the authorization system (312) and the resource system (314).

Each one of the computing device (302), client system (304), authorization system (312), and resource system (314) comprise a networked electronic device whereby communications (322), (324), and (326) can be implemented using any suitable communications protocol and connection, including a wired and/or a wireless connection.

Certain embodiments may provide, for example, a computer-implemented method for securing the use of one or more digital tokens.
A. In certain embodiments, for example, the computer-implemented method may be performed by a client system controlled by a client entity. In certain embodiments, for example, the computer implemented method may be performed in a network environment (for example, an environment in which the digital token is transmitted between discrete systems connected by the public Internet).
B. In certain embodiments the one or more digital tokens may comprise an access token, refresh token, or grant token. In certain embodiments, for example, the one or more digital tokens may be issued by an authorization system. In certain embodiments, for example, the one or more digital tokens may be accepted by a resource system as one or more authorization credentials for a protected resource by a resource system that is controlled by a resource entity. In certain embodiments, for example, the protected resource may be financial information. In certain embodiments, for example, the financial information may be derived from the use of a financial product (for example, a credit card). In certain embodiments, for example, the financial product may be a financial product that is co-branded by the client entity and the resource entity.
C. In certain embodiments, for example, the computer-implemented method may comprise encrypting (for example, encrypting by a cryptosystem) the digital token using a code (for example, a dual-purpose code) to form an encrypted digital token. In certain embodiments, for example, the code may comprise an identification code for a computing device. In certain embodiments, for example, the code may be an encryption key suited to the cryptosystem. In certain embodiments, for example, the computer-implemented method may comprise generating the code using a symmetric cryptosystem, asymmetric cryptosystem, or quantum cryptosystem. In certain embodiments, for example, the computer-implemented method may comprise generating the code and a public key using asymmetric cryptography. In certain embodiments, for example, the computer-implemented method may proscribe storing the encrypted access token on the computing device.
D. In certain embodiments, for example, the computing device may be a mobile computing device. In certain embodiments, for example, the computing device may be a smartphone. In certain embodiments, for example, the computing device may be a computing device of a customer of the client entity.
E. In certain embodiments, for example, the computer-implemented method may comprise assigning the encrypted digital token to the computing device. In certain embodiments, for example, the encrypted digital token may be stored in a database and associated (for example, indexed) by an identifier (an identifier different from the code).
F. In certain embodiments, for example, the code may be transmitted to the computing device. In certain embodiments, for example, the code may be transmitted via a network pathway. In certain embodiments, for example, the network pathway may be encrypted (for example, the network pathway may comprise a negotiated SSL or IPSEC connection). In certain embodiments, for example, the code may be transmitted code may be transmitted in a cookie. In certain embodiments, for example, the transmitted code may be received by the computing device and stored in a secure enclave of the computing device.
G. In certain embodiments, for example, the computer-implemented method may comprise expunging the digital token and/or the code. In certain embodiments, for example, the expunging may comprise deallocating volatile memory that contains the digital token and/or the code. In certain embodiments, for example, the expunging may comprise overwriting volatile memory that contains the digital token and/or the code. In certain embodiments, for example, the computer-implemented method may proscribe copying the digital token and/or the code to non-volatile memory.

Certain embodiments may comprise, for example, a product for securing the use of digital tokens (for example, access tokens). In certain embodiments, for example, the product may comprise a non-transitory computer readable medium including instructions that, when executed by at least one processor, cause the at least one processor to perform token management operations.
A. In certain embodiments, for example, the token management operations may comprise encrypting the digital token using an identification code (for example, a non-public identification code) for a computing device to form an encrypted digital token. In certain embodiments, for example, the token management operations may comprise assigning the encrypted digital token to the computing device (for example, by associating a public key associated with the identification code with the encrypted digital token). In certain embodiments, for example, the token management operations may comprise transmitting the identification code to the computing device (for example, via a secure network tunnel). In certain embodiments, for example, the token management operations may comprise expunging the digital token and the identification code. In certain embodiments, for example, the expunging may be performed with respect to a volatile memory of a system on which the product is installed (for example, one or more servers on which the product is installed).
B. In certain embodiments, for example, the token management operations may comprise communicating (for example, using an encrypted connection over the public Internet) with a downloadable mobile app on the computing device to transmit the identification code.
C. In certain embodiments, for example, the token management operations may comprise receiving the identification code from the computing device (for example, as part of a request for one or more items of a protected resource associated with the identification code and/or the computing device). In certain embodiments, for example, the token management operations may comprise decrypting the encrypted digital token using the identification code received from the computing device to recover the digital token. In certain embodiments, for example, the token management operations may comprise requesting one or more protected resources associated with the digital token. In certain embodiments, for example, the requesting may comprise transmitting the recovered digital token to a resource system. In certain embodiments, for example, the token management operations may comprise processing a response to the requesting. In certain embodiments, for example, the response may comprise the one or more protected resources.

Certain embodiments may comprise, for example, a system for securing the use of digital tokens in network environments. In certain embodiments, for example, the system may comprise a networked system controlled by an entity (for example, a client entity) that interacts with other entities on the network (for example, interacts with a computing device and an authorization system via the public Internet).
A. In certain embodiments, for example, the system may comprise one server, one or more servers, or a plurality of servers. In certain embodiments, for example, the one server, one or more servers, or plurality of servers may controlled by a client entity. In certain embodiments, for example, the one server, one or more servers, or plurality of servers may form part of a client engine.
B. In certain embodiments, for example, the one server, one or more servers, or plurality of servers may be programmed to encrypt a digital token (for example, an access token) using a code (for example, a dual-purpose code that is an identification code and an encryption key) to form an encrypted digital token.
C. In certain embodiments, for example, the one server, one or more servers, or plurality of servers may be programmed to assign the encrypted access token to a computing device (for example, a customer's computing device such as a customer's smartphone).
D. In certain embodiments, for example, the one server, one or more servers, or plurality of servers may be programmed to transmit the code (for example, via a secure network tunnel and/or in a cookie) to the computing device.
E. In certain embodiments, for example, the one server, one or more servers, or plurality of servers may be programmed to expunge the digital token and the code. In certain embodiments, for example, the expunge may comprise deallocating and/or overwriting (for example, with a predetermined value) memory containing the digital token and the code (for example, expunging immediately after transmitting the code).
F. In certain embodiments, for example, the system may comprise a database. In certain embodiments, for example, the database may be configured to store the encrypted access token remotely from the computing device. In certain embodiments, for example, the database may be stored in a portion of the memory of the one server, one or more servers, or plurality of servers. In certain embodiments, for example, the database may index the encrypted access token using a public key associated with the code (for example, a public key generated with the code wherein the code is a private key generated by a public key cryptosystem).
G. In certain embodiments, for example, the system may comprise computer-executable instructions to store the code on the computing device. In certain embodiments, for example, the computer-executable instructions may comprise one or more software components. In certain embodiments, for example, the one or more software components may be a downloaded app (for example, a mobile app). In certain embodiments, for example, the computer-executable instructions may be configured to securely store the code on the computing device (for example, in a secure enclave of the computing device).

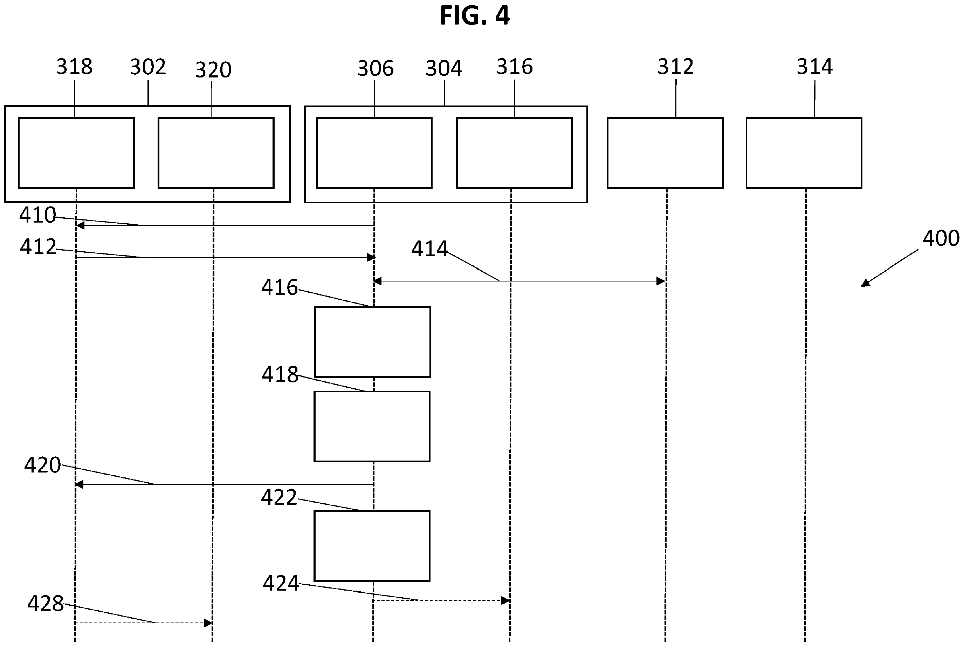

Referring to FIG. 4, there is shown token management operations for securing an access token in a network environment (400).

In step (410), a client engine (306) of a client system (304) requests authorization from a customer engine (318) of a computing device (302) for access to the protected resource. The authorization request in step (410) can be made directly to the customer engine (318) of the computing device (302), or indirectly via the authorization system (312) as an intermediary.

In step (412), the client engine (306) of the client system (304) receives a grant to access a protected resource from the customer engine (318) of the computing device (302). For example, in the OAuth framework, the grant may be expressed using one of a plurality of "grant types" described in the Authorization Framework of OAuth, and the grant type depends on the method(s) used by the client engine (306) of the client system (304) to request authorization and the type(s) supported by the authorization system (312).

In step (414), the client engine (306) of the client system (304) requests an access token by authenticating with the authorization system (312) and presenting the authorization grant. For example, in OAuth the authentication may be expressed using one of a plurality of "authentication types" for authenticating the client system (304) at the authorization system (312), and the authentication type depends on the method(s) used by the client engine (306) of the client system (304) to authenticate itself and the type(s) supported by the authorization system (312).

In step (414), the authorization system (312) authenticates the client engine (306) of the client system (304) and validates the authorization grant, and if valid, issues an access token to the client engine (306) of the client system (304). If the authorization grant is validated in step (414), the authorization system (312) may also optionally issue a refresh token for the access token to the client engine (306) of the client system (304).

In step (416), the client engine (306) of the client system (304) encrypts the access token using an identification code for a computing device to form an encrypted access token. If the optional refresh token was received from the authorization system (312) in step (414), then the client engine (306) of the client system (304) encrypts the refresh token in step (416) using the identification code for the computing device to form an encrypted refresh token.

In step (418), the client engine (306) of the client system (304) assigns the identification code to the computing device.

In step (420), the client engine (306) of the client system (304) transmits the identification code to the computing device (302).

In step (422), the client engine (306) of the client system (304) expunges the access token and the identification code from the client system (304).

In optional step (424), the client engine (306) of the client system (304) may store the encrypted access token (or any other kind of digital token such as a refresh token) in a nonvolatile memory (316) of the client system (304).

In optional step (428), the customer engine (318) of the computing device (302) may store the identification code in a storage media (320) of the computing device (302).

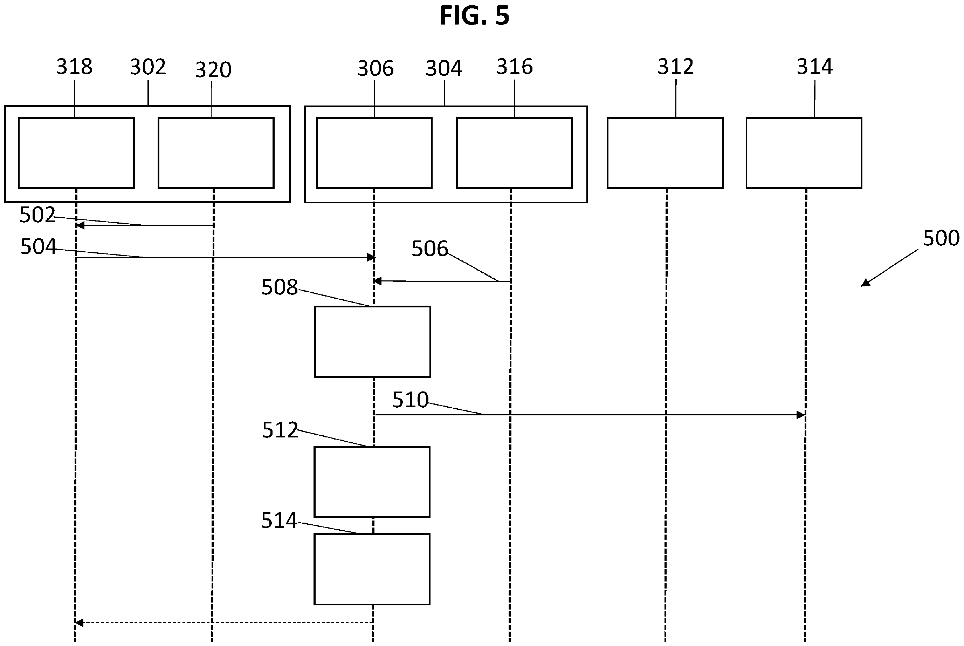

Referring to FIG. 5, there is shown token management operations (500) for using a secured access token in a network environment.

In step (502), the customer engine (318) of the computing device (302) retrieves the identification code (for example, a dual non-public identification code and private key for decrypting the encrypted access token) from the nonvolatile memory (316).

In step (504), the customer engine (318) of the computing device (302) transmits the identification code to the client engine (306) of the client system (304).

In step (506), the client engine (306) of the client system (304) retrieves the encrypted access token from the nonvolatile memory (316) of the client system (304).

In step (508), the client engine (306) of the client system (304) decrypts the encrypted access token to obtain the access token.

In step (510), the client engine (306) of the client system (304) transmits the access token obtained in step (508) with a request for a protected resource to the resource system (314).

In step (512), the client engine (306) of the client system (304) expunges the access token and the identification code from the client system (304).

In step (514), the resource system (314) determines whether the access token is valid. If the access token is valid, then the resource system (314) transmits the protected resource to the client engine (306) of the client system (304).

In optional step (516), the client engine (306) of the client system (304) transmits the protected resource to the customer engine (318) of the computing device (302).

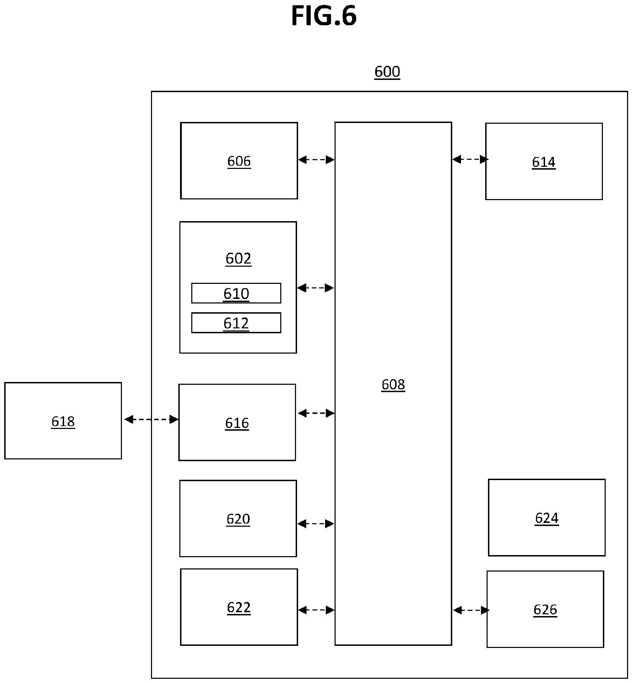

Referring to FIG. 6 there is shown a block diagram illustrating a mobile computing device (600) architecture in accordance with an exemplary embodiment. A person of ordinary skill in the art may appreciate that embodiments of the disclosed subject matter can be practiced with various computer system configurations, including multi-core multiprocessor systems, minicomputers, mainframe computers, computers linked or clustered with distributed functions, as well as pervasive or miniature computers that may be embedded into virtually any device. For instance, at least one processor device and a memory may be used to implement the above described embodiments.

The mobile computing device (600) can comprise a single hardware processor, a plurality of hardware processors, or combinations thereof. Each hardware processor can have one or more processor "cores."

Various embodiments of the present disclosure are described in terms of this mobile computing device (600). After reading this description, it will become apparent to a person skilled in the relevant art how to implement the present disclosure using other computer systems and/or computer architectures. Although operations may be described as a sequential process, some of the operations may in fact be performed in parallel, concurrently, and/or in a distributed environment, and with program code stored locally or remotely for access by single or multiprocessor machines. In addition, in some embodiments the order of operations may be rearranged without departing from the spirit of the disclosed subject matter.

Hardware processor (606) can be a special purpose or a general purpose processor device. The hardware processor (606) can be connected to a communication infrastructure (608), such as a bus, message queue, network, multi-core message-passing scheme, etc. The network can be any network suitable for performing the functions as disclosed herein and can include a local area network (LAN), a wide area network (WAN), a wireless network (for example, Wi-Fi) such as Bluetooth, a mobile communication network, a satellite network, the Internet, fiber optic, coaxial cable, infrared, radio frequency (RF), networks using the global positioning system (GPS) platform, networks using ultra-wideband or pulse radio, any other suitable communication network, or any combination thereof. Other suitable network types and configurations will be apparent to persons having skill in the relevant art. The mobile computing device (600) can also include a memory (602) (for example, random access memory, read-only memory, etc.). The memory (602) can be read from and/or written to in a well-known manner. In an exemplary embodiment, the memory (602) can be non-transitory computer readable recording media.

Data stored in the mobile computing device (600) (for example, a non-public identification code in the memory (602)) can be stored on any type of suitable computer readable media, such as optical storage (for example, a compact disc, digital versatile disc, Blu-ray disc, etc.), magnetic tape storage (for example, a hard disk drive), or solid-state drive. An operating system (610) and one or more applications (612) can be stored in the memory (602).

In an exemplary embodiment, the data can be configured in any type of suitable database configuration, such as a relational database, a structured query language (SQL) database, a distributed database, an object database, etc. Suitable configurations and storage types will be apparent to persons having skill in the relevant art.

The mobile computing device (600) can also include a communications interface (614). The communications interface (614) can be configured to allow software and data to be transferred between the mobile computing device (600) and external or remote devices. The communications interface (614) can include a cellular phone interface, modem, a network interface (for example, an Ethernet card), a communications port, a PCMCIA slot and card, etc. Software and data transferred via the communications interface (614) can be in the form of signals, which may be electronic, electromagnetic, optical, or other signals as will be apparent to persons having skill in the relevant art. The signals may travel via Wi-Fi, wire, cable, fiber optics, a phone line, a cellular phone link, a radio frequency link, etc.

Computer executable instructions can be stored in the memory (602). Part or all of the computer executable instructions (for example, part or all of the computer executable instructions in the form of a downloadable app) can be received via the communications interface (614). Such computer executable instructions, when executed, can enable the mobile computing device (600) to implement the present methods (for example, token management operations) as discussed herein. Computer executable instructions can include controllers of the mobile computing device (600). Where the present disclosure is implemented using software, the software can be stored in a computer program product or non-transitory computer readable medium and loaded into the mobile computing device (600) using a removable storage drive or communications interface (614).

The mobile computing device (600) can also include various hardware devices, such as a camera (620), a microphone (not shown), a power controller (622), a peripheral interface (624), and input/output ports (626) such as USB, firewire, thunderbolt ports, etc.

The mobile computing device (600) can also include a display interface (616) that outputs display signals to a display unit (618), for example, LCD screen, plasma screen, LED screen, DLP screen, CRT screen, or other suitable display device as desired. The display unit (618) can comprise a touch screen capability for input.

The operating system(s) (610) of the mobile computing device (600) can communicate with either the serial buses (vis-à-vis the communication infrastructure (608) directly, if running the operating system (610) as a native operating system or as a pass-through from the hypervisor (not shown), if running on a guest virtual machine. The operating system(s) (610) can control access to device hardware and device power states using the defined policy rules. Access to one or more applications (612) and one or more files stored or running on the operating system(s) (610) are also enabled or disabled using the device management functionality of the location-based security system and method of the present disclosure. A file can be, for example, a document, picture, video, database records, etc. The operating system(s) (610) can include a mobile operating system, for example, an Android mobile operating system, a Wear mobile operating system, a Chrome mobile operating system, a Sailfish mobile operating system, a Tizen mobile operating system, a KaiOS mobile operating system, a Fuchsia mobile operating system, a LiteOS mobile operating system, an OpenHarmony mobile operating system, an Ubuntu mobile operating system, an iOS mobile operating system, an iPadOS mobile operating system, a watchOS mobile operating system, a bridgeOS mobile operating system, a Kindle mobile operating system, a Nintendo mobile operating system, a PlayStation mobile operating system, or a Windows mobile operating system.

In an exemplary embodiment shown in FIG. 6, the mobile computing device (600) includes the memory (602) having computer-readable instructions tangibly recorded thereon. The mobile computing device (600) can also include a hardware processor (606) configured to execute the computer-readable instructions recorded on the memory (602).

The memory (602) can be in the form of a hard disk, optical disk, flash memory (for example, EEPROM, SSN, NAND), or any other suitable memory device including memory chips as desired. The memory (602) can include one or more devices having addressable locations for storing data related to applications, software, and information, and/or data related to software and hardware components of the mobile computer device.

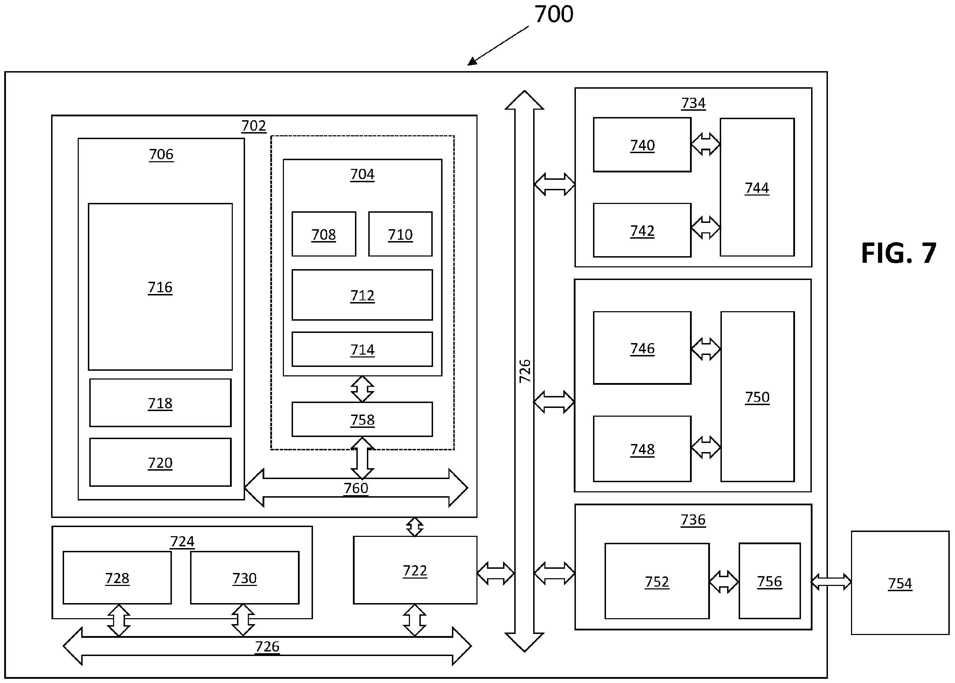

Referring to FIG. 7 there is shown a system architecture (700) in accordance with client system (304), authorization system (312), and resource system (314) for embodiments of the present disclosure. A client system device (702) can include one or more processors (704) and a system memory (706). A memory bus (760) can be used for communicating between one or more processors (704) and system memory (706).

Depending on the desired configuration, the one or more processors (704) can be of any type including but not limited to a microprocessor (µP), a microcontroller (µC), a digital signal processor (DSP), or any combination thereof. The one or more processors (704) can include one more levels of caching, such as a level-one cache (708) and a level-two cache (710), a processor core (712), and registers (714). An example processor core (712) can include an arithmetic logic unit (ALU), a floating-point unit (FPU), a digital signal processing core (DSP Core), or any combination thereof. A memory controller (758) can also be used with the one or more processors (704), or in some implementations, memory controller (758) can be an internal part of the one or more processors (704).

Depending on the desired configuration, the system memory (706) can be of any type including but not limited to volatile memory (such as RAM), non-volatile memory (such as ROM, flash memory, etc.) or any combination thereof. The system memory (706) can include an operating system (716), one or more applications (718), and program data (720).

The system architecture (700) can have additional features or functionality, and additional interfaces to facilitate communications between the client system device (702) and any other devices and interfaces. For example, a bus/interface controller (722) can be used to facilitate communications between the client system device (702) and one or more data storage devices (724) via a storage interface bus (726). The data storage devices (724) can be removable storage devices (728), non-removable storage devices (730), or a combination thereof. Examples of removable storage and non-removable storage devices include magnetic disk devices such as flexible disk drives and hard-disk drives (HDD), optical disk drives such as compact disk (CD) drives or digital versatile disk (DVD) drives, solid state drives (SSD), and tape drives to name a few. Example computer storage media can include volatile and nonvolatile, removable and non-removable media implemented in any method or technology for storage of information, such as computer readable instructions, data structures, program modules, or other data.

The system memory (706), removable storage devices (728), and non-removable storage devices (730) are examples of computer readable storage media. Computer readable storage media include, but not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other media which can be used to store the desired information and which can be accessed by client system device (702). Any such computer readable storage media can be a part of system architecture (700).

The system architecture (700) can also include an interface bus (732) for facilitating communication from various interface devices (for example, output devices (734), peripheral interfaces (736), and communication devices (738)) to the client system device (702) via bus/interface controller (722). Example output devices (734) include a graphics processing unit (740) and an audio processing unit (742), which can be configured to communicate to various external devices such as a display or speakers via one or more A/V ports (744). Example peripheral interfaces (736) include a serial interface controller (746) or a parallel interface controller (748), which can be configured to communicate with external devices such as input devices (for example, keyboard, mouse, pen, voice input device, touch input device, etc.) or other peripheral devices (for example, printer, scanner, etc.) via one or more I/O ports (750). Communication devices (738) can include a network controller (752), which can be arranged to facilitate communications with one or more other architectures (754) over a network communication link via one or more communication ports (756).

The present disclosure is not to be limited in scope by the specific embodiments described herein. Indeed, other various embodiments of and modifications to the present disclosure, in addition to those described herein, will be apparent to those of ordinary skill in the art from the foregoing description and accompanying drawings. Thus, such other embodiments and modifications are intended to fall within the scope of the present disclosure. Further, although the present disclosure has been described herein in the context of at least one particular implementation in at least one particular environment for at least one particular purpose, those of ordinary skill in the art will recognize that its usefulness is not limited thereto and that the present disclosure may be beneficially implemented in any number of environments for any number of purposes. Accordingly, the claims set forth below should be construed in view of the full breadth and spirit of the present disclosure as described herein.
The following numbered embodiments form part of the description:
1. A computer-implemented method for securing the use of digital tokens in network environments, comprising: i) encrypting a digital token using an identification code for a computing device to form an encrypted digital token; ii) assigning the encrypted digital token to the computing device; iii) transmitting the identification code to the computing device; and iv) expunging the digital token and the identification code.
2. The computer-implemented method of embodiment 1, further comprising generating the identification code using symmetric cryptography.
3. The computer-implemented method of embodiment 1, wherein the identification code is transmitted to the computing device via a web browser of the computing device.
4. The computer-implemented method of embodiment 1, wherein the identification code is a private key corresponding to a public key.
5. The computer-implemented method of embodiment 1, further comprising storing the encrypted digital token in a database.
6. The computer-implemented method of embodiment 1, further comprising storing the encrypted digital token remotely from the computing device.
7. The computer-implemented method of embodiment 1, wherein the computing device is a smartphone.
8. The computer-implemented method of embodiment 1, wherein the computing device is a customer's computing device.
9. The computer-implemented method of embodiment 1, wherein the computing device is an employee's computing device.
10. The computer-implemented method of embodiment 1, wherein the identification code is transmitted to the computing device in a cookie.
11. The computer-implemented method of embodiment 1, wherein the digital token is an access token.
12. The computer-implemented method of embodiment 1, wherein the digital token is a refresh token.
13. A client system for securing the use of digital tokens in network environments, comprising: i) one or more servers programmed to: a) encrypt a digital token using a identification code for a computing device to form an encrypted digital token; b) assign the encrypted digital token to the computing device; c) transmit the identification code to the computing device; and d) expunge the digital token and the identification code; ii) a database, the database configured to store the encrypted digital token remotely from the computing device; and iii) one or more software components, the one or more software components configured to store the identification code on the computing device.
14. The client system of embodiment 13, wherein a mobile app comprises the one or more software components.
15. The client system of embodiment 14, wherein the mobile app is downloaded to the computing device via the public Internet.
16. The client system of embodiment 13, wherein the one or more software components is configured to store the identification code in a secure enclave on the computing device.
17. The client system of embodiment 13, wherein the client system is configured to obtain the digital token from a resource system based on an authorization grant received from the computing device.
18. A product for securing the use of digital tokens in network environments, the product comprising a non-transitory computer readable medium including instructions that, when executed by at least one processor, cause the at least one processor to perform token management operations, the token management operations comprising: i) encrypting a digital token using an identification code for a computing device to form an encrypted digital token; ii) assigning the encrypted digital token to the computing device; iii) transmitting the identification code to the computing device; and iv) expunging the digital token and the identification code.
19. The product of embodiment 18, wherein the token management operations further comprise: communicating with a downloadable mobile app on the computing device to transmit the identification code.
20. The product of embodiment 18, wherein the token management operations further comprise: i) receiving the identification code from the computing device; ii) decrypting the encrypted digital token using the identification code to recover the digital token; iii)requesting one or more protected resources associated with the digital token, the requesting comprising transmitting the digital token to a resource system; and iv) processing a response to the requesting, the response comprising the one or more protected resources.

## Claims

1. A computer-implemented method for securing the use of digital tokens in network environments, comprising:
i) encrypting a digital token using an identification code for a computing device to form an encrypted digital token;
ii) assigning the encrypted digital token to the computing device;
iii) transmitting the identification code to the computing device; and
iv) expunging the digital token and the identification code.

2. The computer-implemented method of claim 1, further comprising generating the identification code using symmetric cryptography.

3. The computer-implemented method of claim 1, wherein the identification code is transmitted to the computing device via a web browser of the computing device.

4. The computer-implemented method of claim 1, wherein the identification code is a private key corresponding to a public key.

5. The computer-implemented method of claim 1, further comprising storing the encrypted digital token in a database.

6. The computer-implemented method of claim 1, further comprising storing the encrypted digital token remotely from the computing device.

7. The computer-implemented method of claim 1, wherein the identification code is transmitted to the computing device in a cookie.

8. The computer-implemented method of claim 1, wherein the digital token is an access token or a refresh token.

9. A client system for securing the use of digital tokens in network environments, comprising:
i) one or more servers programmed to perform the method of any preceding claim;
ii) a database, the database configured to store the encrypted digital token remotely from the computing device; and
iii) one or more software components, the one or more software components configured to store the identification code on the computing device.

10. The client system of claim 9, wherein a mobile app comprises the one or more software components, optionally wherein the mobile app is downloaded to the computing device via the public Internet.

11. The client system of claim 9, wherein the one or more software components is configured to store the identification code in a secure enclave on the computing device.

12. The client system of claim 9, wherein the client system is configured to obtain the digital token from a resource system based on an authorization grant received from the computing device.

13. A product for securing the use of digital tokens in network environments, the product comprising a non-transitory computer readable medium including instructions that, when executed by at least one processor, cause the at least one processor to perform token management operations, the token management operations comprising the method of any of claims 1 to 8.

14. The product of claim 13, wherein the token management operations further comprise: communicating with a downloadable mobile app on the computing device to transmit the identification code.

15. The product of claim 13, wherein the token management operations further comprise:
i) receiving the identification code from the computing device;
ii) decrypting the encrypted digital token using the identification code to recover the digital token;
iii) requesting one or more protected resources associated with the digital token, the requesting comprising transmitting the digital token to a resource system; and
iv) processing a response to the requesting, the response comprising the one or more protected resources.
